# EUROPEAN PATENT SPECIFICATION

(11) **EP 2 189 362 B1**
(45) Date of publication and mention of the grant of the patent: **20.08.2014**
(21) Application number: 08827756.1
(22) Date of filing: 21.08.2008
(51) Int. Cl.: B62K 3/00, B62M 3/00, A63B 22/06, B62M 3/02

(54) **IMPROVEMENTS IN THE DRIVE SYSTEM FOR BICYCLES**
VERBESSERTES ANTRIEBSSYSTEM FÜR FAHRRÄDER
PERFECTIONNEMENTS DU SYSTÈME MOTEUR DE BICYCLETTES

(30) Priority: 22.08.2007 ES 200702319
(43) Date of publication of application: 26.05.2010
(73) Proprietor: Bicicletas Goi-contini, S.l., 31192 Mutilva Baja (Navarra) (ES)
(72) Inventor: HERNAIZ GOICOECHEA, Rufino, E-31192 Mutilva Baja (Navarra) (ES); MARTÍNEZ MARTÍNEZ, José, E-46520 Puerto de Sagunto (Valencia) (ES)
(74) Representative: Cabinet Plasseraud
(86) International application number: PCT/ES2008/000568
(87) International publication number: WO 2009/024632

(56) References cited:
- EP-A2- 1 398 257
- CH-A- 236 146
- DE-A1- 2 610 644
- DE-U1- 8 614 882
- ES-A1- 2 245 185
- ES-T3- 2 201 312
- US-A- 4 647 060
- US-A- 5 403 027
- US-A- 5 566 589
- US-A- 6 050 584

## Description

### Field of the Art

The object of the present invention relates to the structural configuration of bicycles and specifically to the type in which the pedal axle is arranged in a position behind the vertical of the seat, proposing a drive system to be applied in this type of bicycle with features that allow performing an exercise that is equivalent to that which is developed when running.

### State of the Art

Practicing physical exercise on a sport level entails risks of experiencing bodily injuries due to repetitive and intense straining that the muscles and joints of the body must withstand.

In order to try to minimize as much as possible the occurrence of injuries due to excessive work according to the type of exercise that is practiced and to maximize the degree of performance, generally training sessions in a gym by means of different apparatuses are usually combined with specific training sessions for the corresponding discipline.

Training sessions in a gym consist of using different types of apparatuses which allow exercising different groups of muscles and joints to reinforce the areas of the body that are involved in physical effort for the purpose of preventing the occurrence of certain injuries.

One of the sports in which injuries usually occur is running, an activity that is considered to be a "high impact" sport. In this discipline, the most common injuries are knee pain (commonly referred to as "runner's knee"), shin pains, pulled muscles, twisted ankles, iliotibial band syndrome, the inflammation of the Achilles tendon or stress fractures.

Athletes who practice this discipline generally have training sessions in a gym on a treadmill, however runners with the "runner's knee" injury, which is caused by a misalignment of the knee joint which does not allow absorbing the impact produced in the stepping when running, have difficulties in this type of training, so they usually combine it with the use of a bicycle to achieve better performance. However, exercising on conventional bicycles does not activate the same groups of muscles as those that are activated when running, so training for this effect in such conditions is deficient.

Bicycles have recently been developed with a drive system characterized by the pedal axle being arranged in a position that is shifted behind the vertical of the seat. These types of bicycles have been designed for the purpose of reaching maximum user performance due to the posture adopted on the bicycle.

Such a bicycle is disclosed in patent document US 4647060, relating to a low-drag bicycle comprising an elongated, two piece, generally tubular frame of elliptical cross-section extending between the front and rear wheels wherein the cyclist assumes a recumbent position over the frame facing down and powers the cycle by means of a pedal arrangement and transmission directly connected to and concentrically arranged with the rear wheel axle. To achieve optimum performance on a bicycle with proper fitting of the bicycle to the cyclist, patent document US 5,566,589 discloses a simple finitely indexable bicycle crank arm extender that is readily, universally and securably installable on a bicycle crank arm including an elongated member having an inner end, an outer end and a plurality of transverse, threaded throughbores. The inner end of the elongated member mounts on the crank arm with a U-bolt that clamps the elongated member and crank arm together. The outer end of the elongated member mounts on the crank arm with a threaded fastener that is received in the distally-disposed threaded bore of the crank arm and threadingly engages one of the plurality of threaded throughbores in the elongated member. A pedal is rotatably mounted at the outer end of the elongated member.

The patent document DE 26 10 644 discloses a bicycle with a pedal and lever drive system for driving the rear wheel according to the preamble of claim 1, which system is provided with two drive levers, each fitted with a pedal, and pivotingly mounted about the rear wheel axle so as to oscillate up and down alternatively and in opposition, such that when one drive lever is pushed down by a cyclist with his foot and pivots over an angle in one direction about the rear wheel axle, the other drive lever rises and pivots over the same or another angle in the opposite direction about the same axle. The system further includes two planetary gears arranged about the rear wheel axle in a mirror image disposition with respect to oneanother. Each planetary gear has an outer hollow toothed crown rigidly connected to the bicycle frame, a planetary carrier rigidly connected to a respective drive lever, and the planet gears of which are in mesh with the corresponding outer hollow toothed crown and with a corresponding sun gear connected to the rear wheel hub by a free wheel and to the other sun gear by a variable-speed transmission surrounding the rear wheel axle and including bevel gears so as to reverse the rotation direction, making it possible that when one drive lever pivots downwards so as to drive the rear wheel, the other drive lever is simultaneously driven so as to pivot upwards.

However, the embodiments of bicycles of this type do not provide exercise conditions equivalent to those of the activity when running.

### Object of the Invention

According to the invention a drive system for bicycles is proposed, the embodiment of which is provided with constructive features making this system particularly advantageous compared to the conventional solutions of the same application.

The proposed drive system is of the type which places the pedal axle in a position behind the vertical of the seat of the bicycle, this position of the pedal axle being determined according to the invention at a certain distance from the vertical of the seat, furthermore incorporating the pedals by means of connecting rods of greater length than conventional ones, such that it achieves an arrangement with which the user of the bicycle adopts a position which allows exercising the muscles and joints in the same conditions as when running.

The proposed drive system has been developed from a comparative test between the efforts affecting a user who runs and the efforts affecting a user who exercises on a bicycle provided with said proposed drive system.

According to the system of the invention, the pedal axle is arranged at a distance between 185-300 mm behind the vertical of the seat of the bicycle, arranging the pedals on connecting rods of a length between 250 and 360 mm, which is essentially greater than that of the connecting rods of pedals in conventional bicycles.

With this arrangement of the system of the invention, the user of the bicycle adopts a posture so that the angle formed by the knees in maximum bending is 44°, whereas in maximum extension the angle at the knees is 155°, while the angle of maximum bending at the hip is 62° and in the position of maximum extension said angle is 145°.

It is thus achieved that when using the bicycle, the same muscles and joints as those exercised when running are exercised, therefore solving the training drawbacks for people who have problems with injuries affecting the impact of stepping on the surface of the ground.

### Description of the Drawings

Figure 1 shows a schematic depiction of the position of a user on a conventional stationary bicycle, in the situation of maximum extension of the body.
Figure 2 is a schematic depiction of the position of the user on the same bicycle as above, in the arrangement of maximum bending of the body.
Figure 3 is a side view of a stationary bicycle provided with the drive system of the invention.
Figure 4 is a plan view of the bicycle of the previous figure.
Figure 5 is a schematic depiction of the position of a user on the bicycle with the drive system of the invention, in the situation of maximum extension of the body.
Figure 6 is a representation of the position of the user on the same bicycle of the previous figure, in the situation of maximum bending of the body.

### Detailed Description of the Invention

The present invention proposes a drive system for bicycles, with which the user performs a body work that is equivalent to the work which is developed when running.

The proposed drive system can be applied both in stationary bicycles and in conventional bicycles with wheels, provided with a handlebar (1) and a seat (2) that can have different configurations and they can be height-adjustable in order to be adapted to different users (3), the functional arrangement including a drive system operated by pedals (4).

The system of the invention is particularly provided for bicycles the pedal axle (5) of which is arranged in a position behind the vertical of the seat (2) of the corresponding bicycle.

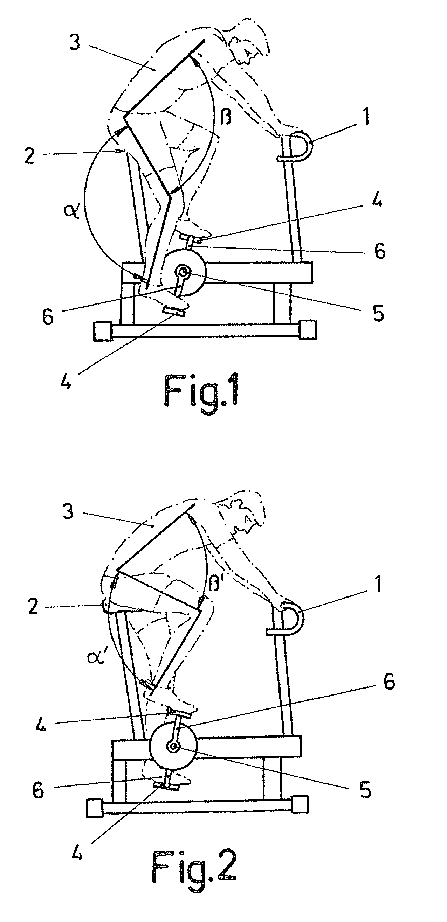

In a bicycle with a conventional arrangement, such as the one shown in Figures 1 and 2, the pedal axle (5) of the operating system is located in front of the vertical of the seat (2), at a distance between 240 and 260 mm from said vertical, whereas the pedals (4) are incorporated with respect to the pedal axle (5) by means of connecting rods (6) of about 200 mm in length.

This configuration of conventional bicycles means that the user (3) adopts on such bicycles a posture such that, according to the depiction of Figure 1, said user acquires an angle (α) of 135° at the knee of the extended leg in the position of maximum extension of the body, whereas the angle (β) between said extended leg and the body of the user (3) is 104°.

In the same manner, in the situation of maximum bending, such as the one depicted in Figure 2, the angle (α') that is acquired at the knee of the bent leg is 84°, whereas the angle (β') between said bent leg and the body of the user (3) is 65°.

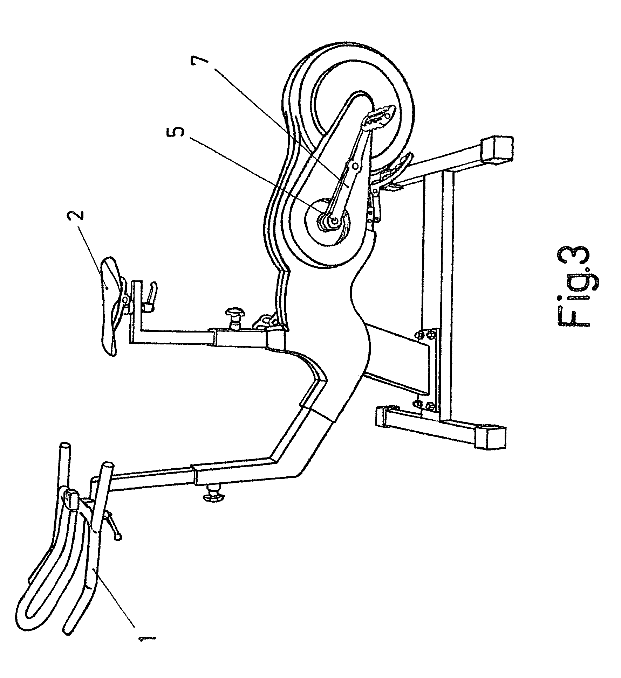

According to the system of the invention, the pedal axle (5) is arranged at a distance between 185 and 300 mm behind the vertical of the seat (2) of the bicycle, in accordance with the arrangement depicted in Figure 3, while the pedals (4) are incorporated in the assembly with respect to the pedal axle (5) by means of connecting rods (7) with an essentially greater length than that of the connecting rods (6) of conventional bicycles.

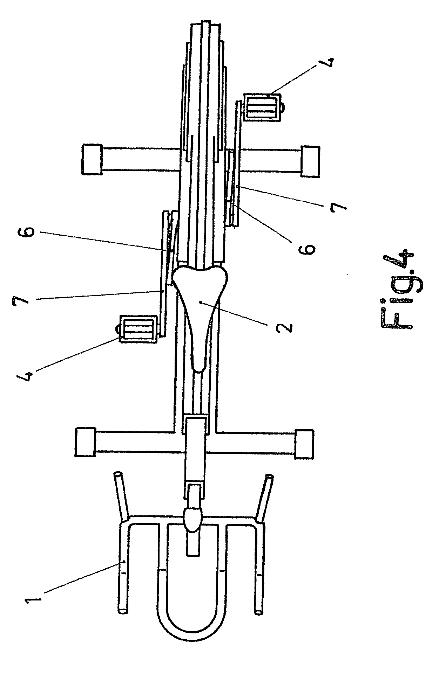

The connecting rods (7) by means of which the assembly pedals (4) is established with the system of the invention are particularly of a length between 250 and 360 mm, being able to be arranged in an assembly coupling by themselves with respect to the pedal axle (5) of the drive system, or by means of a securing arrangement on conventional connecting rods (6), as a supplement thereof, as depicted in Figure 4.

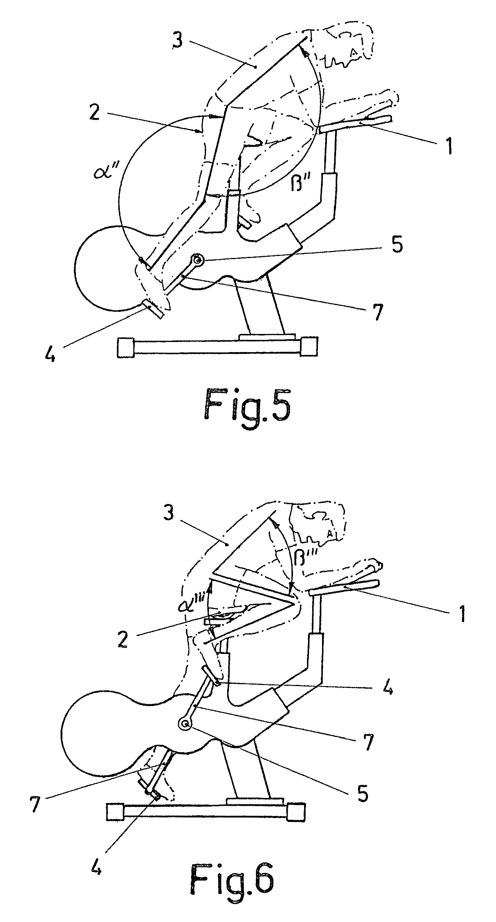

This arrangement of the drive system in accordance with the invention means that the user (3) of the bicycle will adopt a posture such that, as shown in Figure 5, when pedaling in the position of maximum extension, the extended leg forms an angle (α") of 155° at the knee, whereas an angle (β") of 145° is formed between said extended leg and the body of the user (3).

In addition, as shown in Figure 6, in the position of maximum bending, the bent leg forms an angle (α"') of 44° at the knee, whereas an angle (β"') of 62° is formed between said bent leg and the body of the user (3).

## Claims

1. A drive system of bicycles, of the type in which the pedal axle is arranged in a position behind the vertical of the seat of the bicycle, whereby the pedals (4) are incorporated in connecting rods (7) of a length between 250 and 360mm, **characterized in that** the pedal axle (5) is located at a distance between 185-300 mm behind the vertical of the seat (2).

2. The drive system of bicycles according to claim 1, **characterized in that** an allowance of the knees of the user (3) when pedaling of between a maximum angle (α") of 155° and a minimum angle (α"') of 44° is determined between the position of the pedal axle (5) and the length of the connecting rods (7).

3. The drive system of bicycles according to claim 1, **characterized in that** an allowance of the hip of the user (3) when pedaling of between a maximum angle (α") of 145° and a minimum angle (β"') of 62° is determined between the position of the pedal axle (5) and the length of the connecting rods (7).

4. The drive system of bicycles according to claim 1, **characterized in that** the connecting rods (7) for the assembly of the pedals (4) are secured on conventional connecting rods (6) of a smaller length by means of which the assembly to the pedal axle (5) is determined.

## Patentansprüche

1. Antriebssystem für Fahrräder der Art, bei der die Pedalachse in einer Position hinter der Vertikalen des Fahrradsattels angeordnet ist, **dadurch gekennzeichnet, dass** die Pedalachse (5) mit einem Abstand zwischen 185 und 300 mm hinter der Vertikalen des Sattels (2) angeordnet ist, wobei die Pedale (4) in Verbindungsstangen (7) mit einer Länge zwischen 250 und 360 mm eingegliedert sind.

2. Antriebssystem für Fahrräder nach Anspruch 1, **dadurch gekennzeichnet, dass** Raum für die Knie des Benutzers (3) beim Treten zwischen einem maximalen Winkel (α") von 155° und einem minimalen Winkel (α"') von 44° zwischen der Position der Pedalachse (5) und der Länge der Verbindungsstangen (7) bestimmt wird.

3. Antriebssystem für Fahrräder nach Anspruch 1, **dadurch gekennzeichnet, dass** Raum für die Hüfte des Benutzers (3) beim Treten zwischen einem maximalen Winkel (β") von 145° und einem minimalen Winkel (β'") von 62° zwischen der Position der Pedalachse (5) und der Länge der Verbindungsstangen (7) bestimmt wird.

4. Antriebssystem für Fahrräder nach Anspruch 1, **dadurch gekenntzeichnet,** dass die Verbindungsstangen (7) für die Montage der Pedale (4) an herkömmlichen kürzeren Verbindungsstangen (6) befestigt sind, mittels derer die Montage an der Pedalachse (5) bestimmt wird.

## Revendications

1. Système moteur de bicyclettes du type dans lequel l'axe des pédales est agencé dans une position en arrière de la verticale de la selle de bicyclette, **caractérisé en ce que** l'axe (5) des pédales est situé à une distance entre 185 mm et 300 mm en arrière de la verticale de la selle (2), et que les pédales (4) sont incorporées à des bielles de liaison (7) d'une longueur entre 250 mm et 360 mm.

2. Système moteur de bicyclettes selon la revendication 1, **caractérisé en ce que** le déplacement des genoux de l'utilisateur (3) au pédalage est autorisé entre un angle maximum (α") de 155° et un angle minimum (α''') de 44° déterminé entre la position de l'axe (5) des pédales et la longueur des bielles (7) de liaison.

3. Système moteur de bicyclettes selon la revendication 1, **caractérisé en ce que** le déplacement de la hanche de l'utilisateur (3) au pédalage est autorisé entre un angle maximum (ß") de 145° et un angle minimum (ß''') de 62° déterminé entre la position de l'axe (5) des pédales et la longueur des bielles (7) de liaison.

4. Système moteur de bicyclettes selon la revendication 1, **caractérisé en ce que** les bielles (7) de liaison pour l'assemblage des pédales (4) sont fixées sur des bielles (6) de liaison conventionnelles de plus petite longueur au moyen desquelles l'assemblage à l'axe (5) des pédales est déterminé.
